(19)

**Europäisches Patentamt**
**European Patent Office**
**Office européen des brevets**

(11) **EP 4 556 584 A1**

(12) **EUROPEAN PATENT APPLICATION**
published in accordance with Art. 153(4) EPC

(43) Date of publication:
**21.05.2025 Bulletin 2025/21**

(21) Application number: **22953911.9**

(22) Date of filing: **01.08.2022**

(51) International Patent Classification (IPC):
**C22B 1/243** (2006.01)

(52) Cooperative Patent Classification (CPC):
**C22B 1/243; Y02P 10/20**

(86) International application number:
**PCT/JP2022/029419**

(87) International publication number:
**WO 2024/028920 (08.02.2024 Gazette 2024/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **JFE Steel Corporation
Tokyo 100-0011 (JP)**

(72) Inventors:
- **TAKEHARA Kenta
  Tokyo 100-0011 (JP)**
- **YAMAMOTO Tetsuya
  Tokyo 100-0011 (JP)**
- **HIGUCHI Takahide
  Tokyo 100-0011 (JP)**

- **IWAMI Yuji
  Tokyo 100-0011 (JP)**
- **FUJIWARA Shohei
  Tokyo 100-0011 (JP)**
- **MORITA Yuya
  Tokyo 100-0011 (JP)**
- **HORITA Kenya
  Tokyo 100-0011 (JP)**
- **HIROSAWA Toshiyuki
  Tokyo 100-0011 (JP)**
- **IGAWA Daisuke
  Tokyo 100-0011 (JP)**

(74) Representative: **Hoffmann Eitle
Patent- und Rechtsanwälte PartmbB
Arabellastraße 30
81925 München (DE)**

(54) **NON-FIRED PELLETS FOR REDUCTION, AND METHOD FOR MANUFACTURING SAME**

(57) Proposed are non-fired pellets for use in a solid reduction furnace that are effective in preventing clustering by reducing the possibility of contact between low-melting-temperature slags and thus preventing the fusion therebetween, and a method for producing such non-fired pellets. Non-fired pellets for reduction, in which the proportion of high-viscosity slag components ($Al_2O_3$ +MgO+$SiO_2$) to the total Fe (T.Fe) satisfies an expression:
($Al_2O_3$+MgO+$SiO_2$)/T.Fe≥0.12, and a method for producing the same. In the expression, $Al_2O_3$ represents the concentration (mass%) of $Al_2O_3$ in the non-fired pellets, MgO represents the concentration (mass%) of MgO in the non-fired pellets, $SiO_2$ represents the concentration (mass%) of $SiO_2$ in the non-fired pellets, and T.Fe represents the concentration (mass%) of T.Fe in the non-fired pellets.

[Fig. 1]

EP 4 556 584 A1

**Description**

Technical Field

The present invention relates to non-fired pellets for reduction that can be effectively used in a solid reduction furnace, and a method for producing the same.

Background Art

In recent years, various technologies have been developed to reduce $CO_2$ emissions in order to avoid global warming due to an increase in the $CO_2$. For example, in the field of steel industry, non-fired pellets are often used in solid reduction furnaces represented by shaft furnaces. This is because $CO_2$ is unavoidably generated in a firing process during the typical operation of fired pellets. However, this is undesirable from the perspective of reducing $CO_2$ emissions. Thus, the use of non-fired pellets is attracting attention.

In particular, in the field of the ironmaking method performed with a solid reduction furnace, which is a hydrogen-based reduction process, there has been ongoing research on non-fired pellets used for such a method. Incidentally, it is known that a raw material (non-fired pellets) fed into the furnace, when passing through a high-temperature zone in such a solid reduction furnace, causes a degradation phenomenon accompanied by volume expansion as the hematite phase in the pellets is reduced and transformed into magnetite phases. It is also known to cause contact and fusion between metallic irons and between low-melting-temperature slags. This results in clustering in the furnace, or a hanging phenomenon such that the pellets in the furnace become immovable and thus cannot be removed from the bottom of the furnace. Such clustering is a significant problem to be solved for, in particular, a solid reduction furnace for performing hydrogen-based reduction.

Under such a circumstance, there have been proposed several prior arts for preventing the clustering observed in a solid reduction furnace as described above. For example, Patent Literature 1 proposes a method for covering the surfaces of pellets with, for example, $Ca(OH)_2$ or $Mg(OH)_2$. Patent Literature 2 proposes a method for preventing reduction-degradation and obtaining a fired pellet with fewer blisters by covering the surface of sintered agglomerated ore (pellet) with a powdery solid fuel. Patent Literature 3 is directed to prevent the occurrence of clustering in a solid reduction furnace as well as reduce heat loss and improve the operation efficiency by covering the surface of a fired pellet with iron ore mixed with cement. Further, Patent Literature 4 proposes a method for performing covering with a material containing a calcium-iron compound represented by CaxFeyOz ($1<y/x\leq2$; $1\leq z$).

Citation List

Patent Literature

Patent Literature 1: JP-S59-10411A
Patent Literature 2: JP-S62-37325A
Patent Literature 3: JP-S63-262426A
Patent Literature 4: JP-2017-119910A

Summary of Invention

Technical Problem

Each of the above conventional methods (Patent Literatures 1 to 4) is a method for reducing the contact between metallic irons after reduction, which can cause clustering observed around a high-temperature zone (500 to 600°C) in a solid reduction furnace, such as a shaft furnace, by mainly interposing non-metallic components therebetween. However, according to the inventors' research, such clustering prevention methods of the conventional technologies are insufficient. This method has a problem in that it also requires to adapt a covering step of non-metallic components, which increases the cost, and the addition of a dedicated facility.

Accordingly, an object of the present invention is to propose, in producing non-fired pellets for use in a solid reduction furnace, non-fired pellets that is effective in preventing clustering by reducing the possibility of contact between low-melting-temperature slags and thus preventing the fusion between the slags, and a method for producing such non-fired pellets.

Solution to Problem

The present invention relates to a method that can solve the above problems of the conventional technologies and has been developed to achieve the above object. First, the present invention proposes non-fired pellets for reduction characterized in that a ratio of high-viscosity slag components ($Al_2O_3$+MgO+$SiO_2$) to total Fe (T.Fe) satisfies the following Expression (1):

$$(Al_2O_3+MgO+SiO_2)/T.Fe \geq 0.12 \ ...(1),$$

where $Al_2O_3$ represents a concentration (mass%) of $Al_2O_3$ in the non-fired pellets,
MgO represents a concentration (mass%) of MgO in the non-fired pellet,
$SiO_2$ represents a concentration (mass%) of $SiO_2$ in the non-fired pellets, and
T.Fe represents a concentration (mass%) of T.Fe in the non-fired pellets.

Second, the present invention proposes a method for producing the above non-fired pellets for reduction, comprising using an iron-containing raw material formulated to achieve an average LOI (Loss on Ignition) of 5% or more.
Note that the non-fired pellets for reduction of the present invention may include the following feature that is considered to be able to provide a more preferable embodiment.

(a) A proportion of high-viscosity slag components ($Al_2O_3$+MgO+$SiO_2$) to total Fe (T.Fe) satisfies the following Expression (2):

$$(Al_2O_3+MgO+SiO_2)/T.Fe \geq 0.15 \ ...(2),$$

where $Al_2O_3$ represents a concentration (mass%) of $Al_2O_3$ in the non-fired pellets,
MgO represents a concentration (mass%) of MgO in the non-fired pellets,
$SiO_2$ represents a concentration (mass%) of $SiO_2$ in the non-fired pellets, and
T.Fe represents a concentration (mass%) of T.Fe in the non-fired pellets.

In addition, the production of the non-fired pellets for reduction may include the following feature that is considered to be able to provide a more preferable embodiment.

(b) The iron-containing raw material has been pretreated for removal of crystal water in advance so as to achieve an average LOI (Loss on Ignition) of 2% or less.
(c) A mixed raw material containing 4 mass% to 24 mass% M.Fe is prepared by mixing a raw material containing M.Fe and is granulated.
(d) The raw material is reduced iron having a particle size of 3 mm or less that has been reduced in a solid reduction furnace.
(e) The reduced iron contains 79 mass% or more M.Fe. M.Fe hereinafter refers to metallic iron.

Advantageous Effects of Invention

The non-fired pellets for reduction of the present invention according to the above-described configuration do not require a firing process and thus do not generate $CO_2$. Such non-fired pellets for reduction are desirable from the viewpoint of reducing $CO_2$ emissions. In particular, allowing high-viscosity slag components ($Al_2O_3$, MgO, and $SiO_2$) to be contained at a high proportion relative to the total iron can reduce the generation of low-melting-temperature slag due to FeO during reduction in a solid reduction furnace and its fluidity. Consequently, it is possible to prevent the possibility of contact or fusion between the pellets due to such interposed slag and thus effectively prevent the above-described clustering in the reduction furnace that is a problem to be solved.
In addition, the production method according to the present invention involves the use of a high-LOI raw material formulated as an iron-containing raw material, causing the obtained non-fired pellets to be porous. Thus, the possibility of contact between the metallic irons can be reduced, thereby effectively preventing clustering and increasing the operation efficiency of a solid reduction furnace.

Brief Description of Drawing

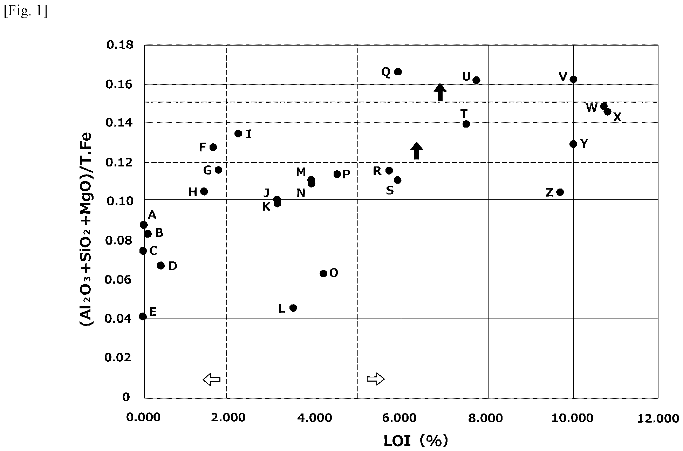

[Fig. 1] Fig. 1 is a graph illustrating the relationship between $(Al_2O_3+MgO+SiO_2)$/T.Fe and LOI of Australian iron ore that is an iron-containing raw material to be mixed.

Description of Embodiments

A solid reduction furnace used in the present invention is a furnace for reducing fed non-fired pellets for reduction to Fe having a reduction degree of 90% or more by using a hydrogen gas, etc., as a reducing gas . In the operation of such a solid reduction furnace, the properties of raw material fed into the furnace, that is, the non-fired pellets are important.

What is most important for the non-fired pellets is whether the pellets can be prevented from contacting or fusing with each other, which would otherwise result in clustering, in a high-temperature zone (500 to 800°C) of the solid reduction furnace as described above. In response to such demand, in the present invention, studies have been made on the relationship between an iron-containing raw material such as metallic iron, iron oxide such as iron ore, iron sulfide, or ironmaking dust and high-viscosity slag components, that is, viscous components. As a result, from the viewpoint of the fluidity of the various raw materials in the furnace, it is found preferable to appropriately manage the relationship particularly between the iron-containing raw material and high-viscosity slag components. That is, the high-viscosity slag is always controlled to be generated in the furnace so that an undesirable flow in the high-temperature zone is suppressed. This can prevent the fusion between slags, thereby preventing clustering.

As described previously, in the present invention, it has been found to be effective to include the high-viscosity slag components in a given ratio in an iron-containing raw material, iron ore, or an auxiliary material to be mixed.

As the components that can be the high-viscosity slag, focus is placed on $(Al_2O_3, MgO, and SiO_2)$, in particular. When the total content of such components is maintained at a predetermined ratio relative to the total iron (T.Fe), it becomes possible to effectively prevent the slag-to-slag fusion caused in the furnace.

This can be achieved when the non-fired pellets for reduction have a component composition such that the high-viscosity slag components $(Al_2O_3+MgO+SiO_2)$ are contained in a given ratio relative to the total iron (T.Fe) in the iron-containing raw material. That is, when the non-fired pellets satisfy the relationship of Expression (1) below.

$$(Al_2O_3+MgO+SiO_2)/T.Fe \geq 0.12 \ ...(1)$$

In Expression (1) above, $Al_2O_3$ represents the concentration (mass%) of $Al_2O_3$ in the non-fired pellets for reduction. MgO represents the concentration (mass%) of MgO in the non-fired pellets for reduction. $SiO_2$ represents the concentration (mass%) of $SiO_2$ in the non-fired pellets for reduction. T.Fe represents the total Fe concentration (mass%) in the non-fired pellets for reduction.

In the present invention, there exists a more preferable relationship between the high-viscosity slag components $(Al_2O_3+MgO+SiO_2)$ and the total iron (T.Fe) from the viewpoint of preventing the contact or fusion between the slags in the high-temperature zone of the furnace, which is Expression (2) below. The relationship indicates that the high-viscosity slag components are contained in a higher amount.

$$(Al_2O_3+MgO+SiO_2)/T.Fe \geq 0.15 \ ...(2)$$

In Expression (2) above, $Al_2O_3$ represents the concentration (mass%) of $Al_2O_3$ in the non-fired pellets for reduction. MgO represents the concentration (mass%) of MgO in the non-fired pellets for reduction. $SiO_2$ represents the concentration (mass%) of $SiO_2$ in the non-fired pellets for reduction. T.Fe represents the total Fe concentration (mass%) in the non-fired pellets for reduction.

Note that in the present invention, the total Fe in the iron-containing raw material refers to the total value of the iron concentrations including the concentrations of metallic iron (M.Fe) and iron compounds (iron oxide, iron sulfide, calcium ferrite, etc.). Meanwhile, the high-viscosity slag components refer to the total value of the concentrations of $Al_2O_3$, MgO, and $SiO_2$ contained in the iron-containing raw material, such as iron ore or ironmaking dust; an auxiliary material (limestone, quicklime, dolomite, etc.); and a binder (bentonite, etc.).

The $Al_2O_3$, MgO, and $SiO_2$ concentrations can be determined as follows. First, the Al concentration, Mg concentration, and Si concentration are measured by elemental analysis such as fluorescent X-ray analysis, for example. Then, each oxide concentration can be determined by multiplying the element concentration thus determined by (the molecular weight of the oxide per element/atomic weight). Specifically, for example, the $Al_2O_3$ concentration can be determined by multiplying the Al concentration measured by elemental analysis, such as fluorescent X-ray analysis, by (the $Al_2O_3$ molecular weight/2)/the Al atomic weight = 50.98/26.98 = 1.890.

Next, the method for producing the non-fired pellets according to the present invention will be described. When producing the non-fired pellets for reduction according to the present invention, in order for the non-fired pellets to satisfy the above relationship between the high-viscosity slag components ($Al_2O_3$+MgO+$SiO_2$) and the total iron (T.Fe), for example, it is possible to use an iron ore originally having a composition of components satisfying the above relationship, or to selectively use and mix a plurality of iron ores to satisfy the above relationship. For example, one or more of iron ores (A to Z) shown in Fig. 1, which are Australian iron ores, may be mixed, followed by granulation with a binder, such as bentonite, and an auxiliary material, such as quicklime, added thereto as appropriate.

When feeding the above non-fired pellets into the solid reduction furnace and reducing the pellets therein it is critical that these pellets do not have properties that would cause clustering in a high-temperature reducing atmosphere in the furnace. Therefore, in the present invention, focus is placed particularly on LOI (Loss on Ignition), the appropriate value of which has been studied. That is, in the production method according to the present invention, some of the types of iron ore (A to Z) shown in Fig. 1 are selectively used (mixed) to achieve a LOI (Loss on Ignition) value of 5% or more so that $LOI \geq$ 5% is satisfied, thereby reducing clustering more effectively. This is because when volatile components, such as crystal water, in the pellets are heated in the reduction furnace to undergo disassociation and vaporization, and then dissipate to the outside of the pellets, the volume of the mineral phases remaining in the pellets is reduced, resulting in voids between the adjacent mineral phases.

Next, in the production method according to the present invention, in order for the iron-containing raw material to achieve the relation $LOI \geq 5\%$, it is preferable to apply a pretreatment such as a process for removing crystal water to the iron ore to be used in advance so as to achieve $LOI \leq 2\%$. This is because since many iron-containing raw materials such as raw material iron ore have a high crystal water content, pellets often burst during granulation due to water vapor generated from the crystal water. Thus, it would be unavoidable to increase the temperature slowly. This would reduce productivity.

[Examples]

<Embodiment 1>

The Examples (including Comparative Examples) show how the relationship between T.Fe and high-viscosity slag components ($Al_2O_3$+MgO+$SiO_2$) in non-fired pellets for reduction affects the clustering in a solid reduction furnace.

As the iron-containing raw material, i.e., iron ore used herein, mainly one or more types of Australian iron ores shown in Fig.1 were mixed with an auxiliary material and reagent (e.g., commercially available $Al_2O_3$ reagent) as appropriate. Table 1 shows examples of the component compositions of the mixtures.

Specifically, non-fired pellet were produced by adding 5 mass% cement to obtain predetermined components, grinding the mixture with a ball mill, granulating the resultant with a pelletizer while adding water to achieve a size of 9 to 16 mm, and then curing the resultant for two weeks.

All raw materials including one or more types of the Australian raw materials (A to Z shown in Fig. 1) described above and having the compositions shown in Table 1 were ground in a ball mill and granulated with a pelletizer while adding water to achieve a size of 9 to 16 mm. Then, the obtained non-fired pellets after granulation were cured for two weeks to produce the final non-fired pellets. Each of the obtained non-fired pellets shown in Table 1 was evaluated using a clustering index.

(Clustering evaluation test)

A sample weighing 500g was fed into a vertical cylindrical furnace with a diameter $\phi$ of 100 mm and heated to 1000°C in an $N_2$ atmosphere. When the temperature of the sample reached 1000°C, a reducing gas was introduced into the furnace at a rate of 24 NL/min. The composition of the reducing gas was set to a volume ratio of $H_2$:$N_2$=20:80. The sample was then loaded at a rate of 1 kg/cm$^2$ and held in this state for three hours, followed by cooling in an $N_2$ atmosphere, so that reduced iron was produced. The reduced iron obtained was then sieved through a 16 mm sieve mesh, which is the maximum size of a single non-fired pellet, to measure the weight Wa (g) of the non-fired pellets remaining on the sieve. The non-fired pellets remaining on the sieve were put into a cylindrical shape vessel (132 mm$\phi \times$ 700 mmL) of an I-type testing machine and were rotated at a rotational speed of 30 rpm for five minutes, to measure the weight Wb (g) of the non-fired pellets remaining on the sieve mesh of 16 mm. The non-fired pellets were evaluated based on a clustering index that is proportional to the non-crushing clustering proportion Wb/Wa.

The porosity of the non-fired pellets was evaluated by measuring the apparent density of the pellets and then measuring the real density of the pellets. As shown in Table 1, it is confirmed that each of the non-fired pellets of Examples 1 to 6 in which ($Al_2O_3$+MgO+$SiO_2$)/T.Fe is 0.12 or more has a clustering index of 15 or less, and thus has excellent properties.

[Table 1]

| | LOI(%) of Iron Ore Before Firing | $(Al_2O_3+MgO+SiO_2)$ /T.Fe | Clustering Index |
|---|---|---|---|
| Comparative Example 1 | 0.3 | 0.06 | 43 |
| Comparative Example 2 | 0.4 | 0.09 | 21 |
| Example 1 | 5.1 | 0.12 | 4 |
| Example 2 | 7.2 | 0.15 | 0 |
| Example 3 | 8.8 | 0.21 | 0 |
| Example 4 | 10.1 | 0.12 | 15 |
| Example 5 | 3.8 | 0.12 | 0 |
| Example 6 | 1.5 | 0.12 | 0 |

Note that Table 2 below shows the component composition of the non-fired pellets obtained in Examples 1 and 2 of Table 1.

[Table 2]

| | | | | | | | (mass%) |
|---|---|---|---|---|---|---|---|
| | T.Fe | FeO | $SiO_2$ | CaO | $Al_2O_3$ | MgO | C/S |
| Example 1 | 59.9 | 0.2 | 4.1 | 4.4 | 2.7 | 0.6 | 0.4 |
| Example 2 | 57.7 | 0.4 | 5.8 | 6.0 | 2.3 | 0.5 | 0.6 |

<Embodiment 2>

Reduced iron (a sample when Wa was measured) obtained by the same method as the method of Comparative Example 2 shown in Table 1 (clustering evaluation test) of Embodiment 1 was ground into particles with a size of 3 mm or less. Then, the obtained particles were mixed with the unfired raw material of Comparative Example 2. The mixture was used to produce non-fired pellets by the method of Embodiment 1. Then, after the non-fired pellets were cured for two weeks, the crushing strength of the resulting non-fired pellets was measured.

The results are shown in Table 3 below. "M.Fe" in Table 3 below is derived from metallic iron (M.Fe) contained in the reduced iron. In Examples 10 to 12, reduced iron containing M.Fe = 78 mass% was used. In Example 13, reduced iron containing M.Fe = 80 mass% was used. As a result, it was found that mixing M.Fe with the raw material can increase the strength of the resulting pellets. Since clustering is promoted as the amount of powder increases, it is possible to suppress clustering by increasing the strength of the non-fired pellets. The reason why mixing M.Fe with the raw material can increase the strength of the resulting non-fired pellets is considered as follows. The reduced iron powder is exposed to air during the curing period, which in turn oxidizes the metallic iron and generates heat, thus promoting fusion between adjacent particles. Therefore, the effect of increasing the strength of the resulting non-fired pellets by mixing M.Fe with the raw material starts to show after two days from the start of granulation, and the increase in the strength almost stops after four weeks from the start of granulation.

[Table 3]

| | M.Fe (%) | $(Al_2O_3+MgO+SiO_2)$/T.Fe | Pellet Strength (kgf) |
|---|---|---|---|
| Comparative Example 2 | 0 | 0.09 | 52 |
| Example 10 | 4 | 0.09 | 67 |
| Example 11 | 8 | 0.09 | 88 |
| Example 12 | 24 | 0.09 | 112 |
| Example 13 | 8 | 0.12 | 91 |

In this specification, the unit "L" of volume represents $10^{-3}$ $m^3$. Symbol "N" added to the unit of the volume of a gas represents the volume of the gas in the standard state, that is, at a temperature of 0°C and a pressure of 101325 Pa. The unit "rpm" of a rotational speed represents the number of rotations per min.

Industrial Applicability

The non-fired pellets for solid reduction according to the present invention are the method that has been developed to be mainly applied to a hydrogen-based direct reduction process. However, as a matter of course, such non-fired pellets can also be used as a raw material for use in a blast furnace, etc.

**Claims**

1. Non-fired pellets for reduction, **characterized in that**

   a proportion of high-viscosity slag components ($Al_2O_3$+MgO+$SiO_2$) to total Fe (T.Fe) satisfies the following Expression (1):

$$(Al_2O_3+MgO+SiO_2)/T.Fe \geq 0.12 \ ...(1),$$

   where $Al_2O_3$ represents a concentration (mass%) of $Al_2O_3$ in the non-fired pellets,
   MgO represents a concentration (mass%) of MgO in the non-fired pellets,
   $SiO_2$ represents a concentration (mass%) of $SiO_2$ in the non-fired pellets, and
   T.Fe represents a concentration (mass%) of T.Fe in the non-fired pellets.

2. Non-fired pellets for reduction, **characterized in that**

   a proportion of high-viscosity slag components ($Al_2O_3$+MgO+$SiO_2$) to total Fe (T.Fe) satisfies the following Expression (2):

$$(Al_2O_3+MgO+SiO_2)/T.Fe \geq 0.15 \ ...(2),$$

   where $Al_2O_3$ represents a concentration (mass%) of $Al_2O_3$ in the non-fired pellets,
   MgO represents a concentration (mass%) of MgO in the non-fired pellets,
   $SiO_2$ represents a concentration (mass%) of $SiO_2$ in the non-fired pellets, and
   T.Fe represents a concentration (mass%) of T.Fe in the non-fired pellets.

3. A method for producing the non-fired pellets for reduction according to claim 1 or 2, **characterized by** comprising using an iron-containing raw material formulated to achieve an average LOI (Loss on Ignition) of 5% or more.

4. The method for producing the non-fired pellets for reduction according to claim 3, wherein the iron-containing raw material has been pretreated for removal of crystal water in advance so as to achieve an average LOI (Loss on Ignition) of 2% or less.

5. A method for producing non-fired pellets for reduction, **characterized in that** a mixed raw material containing 4 mass% to 24 mass% M.Fe is prepared by mixing a raw material containing M.Fe and is granulated.

6. The method for producing non-fired pellets for reduction according to claim 5, wherein the raw material is reduced iron with a particle size of 3 mm or less that has been reduced in a solid reduction furnace.

7. The method for producing non-fired pellets for reduction according to claim 6, wherein the reduced iron contains 79 mass% or more M.Fe.

[Fig. 1]

## INTERNATIONAL SEARCH REPORT

| International application No. |
| --- |
| **PCT/JP2022/029419** |

| A. | CLASSIFICATION OF SUBJECT MATTER |
| --- | --- |

***C22B 1/243***(2006.01)i
    FI:   C22B1/243

According to International Patent Classification (IPC) or to both national classification and IPC

| B. | FIELDS SEARCHED |
| --- | --- |

Minimum documentation searched (classification system followed by classification symbols)

    C22B1/243

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2012/066899 A1 (KK KOBE SEIKO SHO) 24 May 2012 (2012-05-24) | 1-2 |
|   | paragraphs [0001]-[0140] |   |
| Y |   | 3-4 |
| A |   | 5-7 |
| X | JP 2003-183716 A (NIPPON STEEL CORP.) 03 July 2003 (2003-07-03) | 5 |
|   | paragraphs [0001]-[0064] |   |
| A |   | 1-4, 6-7 |
| Y | JP 54-066314 A (NIPPON STEEL CORP.) 28 May 1979 (1979-05-28) | 3-4 |
|   | pages 1-3 |   |
| Y | JP 2012-062505 A (KK KOBE SEIKO SHO) 29 March 2012 (2012-03-29) | 3-4 |
|   | paragraphs [0001]-[0091] |   |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 August 2022** | **06 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (January 2015)

**INTERNATIONAL SEARCH REPORT**
Information on patent family members

International application No.

**PCT/JP2022/029419**

| Patent document cited in search report | | | Publication date (day/month/year) | Patent family member(s) | Publication date (day/month/year) |
|---|---|---|---|---|---|
| WO | 2012/066899 | A1 | 24 May 2012 | (Family: none) | |
| JP | 2003-183716 | A | 03 July 2003 | (Family: none) | |
| JP | 54-066314 | A | 28 May 1979 | (Family: none) | |
| JP | 2012-062505 | A | 29 March 2012 | (Family: none) | |

Form PCT/ISA/210 (patent family annex) (January 2015)

**REFERENCES CITED IN THE DESCRIPTION**

**Patent documents cited in the description**

- JP S5910411 A
- JP S6237325 A
- JP S63262426 A
- JP 2017119910 A